# EUROPÄISCHE PATENTSCHRIFT

(11) **EP 2 715 194 B1**
(45) Veröffentlichungstag und Bekanntmachung des Hinweises auf die Patenterteilung: **08.06.2016**
(21) Anmeldenummer: 12723667.7
(22) Anmeldetag: 24.05.2012
(51) Int. Cl.: F16J 9/26

(54) **KOLBENRING MIT VERBUNDBESCHICHTUNG**
PISTON RING WITH COMPOSITE COATING
SEGMENT DE PISTON POURVU D'UN REVÊTEMENT COMPOSITE

(30) Priorität: 25.05.2011 DE 102011076453
(43) Veröffentlichungstag der Anmeldung: 09.04.2014
(73) Patentinhaber: Federal-Mogul Burscheid GmbH, 51399 Burscheid (DE)
(72) Erfinder: BÄRENREUTER, Dirk, 51519 Odenthal (DE); BRADL, Christoph, 51399 Burscheid (DE)
(74) Vertreter: Becker Kurig Straus
(86) Internationale Anmeldenummer: PCT/EP2012/059708
(87) Internationale Veröffentlichungsnummer: WO 2012/160138

(56) Entgegenhaltungen:
- EP-A2- 0 905 419
- DE-U1- 7 608 044
- JP-A- 8 184 375
- JP-A- 58 072 769

## Beschreibung

Die vorliegende Erfindung betrifft im allgemeinen Kolbenringe für Kolbenmaschinen und im speziellen Kolbenringe für Verbrennungsmotoren.

Es ist seit längerem bekannt, Kolbenringe auf der Außenseite mit verschiedenen Einlauf- und oder Verschleißschutzschichten zu beschichten, um die Reibpaarung Kolbenring/Zylinderinnenwand zu verbessern.

Jede Beschichtung auf einer Außenseite eines Kolbenrings mit verschiedenen Einlauf- und oder Verschleißschutzschichten, die einen anderen Wärmeausdehnungskoeffizienten aufweisen als das Grundmaterial des Kolbenrings, führt bei einem Wechsel zwischen Normal- und Betriebstemperatur zu einem Bimetalleffekt. Dieser Bimetalleffekt wirkt sich bei einem Kolbenring auf den Anpressdruck und die Anpressdruckverteilung des Kolbenrings auf die Zylinderlauffläche aus. Der Bimetalleffekt wird dabei noch von den Effekten der normalen Wärmeausdehnung und eventuellen Effekten der Erwärmung auf die Materialfestigkeit überlagert.

Aus dem Stand der Technik sind bereits vollständig beschichtete Kolbenringe bekannt. Weiterhin sind Kolbenringe bekannt, die innen und außen mit einer Verschleißschutzschicht versehen sind und mit Beschichtungsverfahren beschichtet wurden, welche eine Beschichtung der Innen- und der Außenseite des Kolbenrings zulassen. Eine Beschichtung der Innenflächen von Kolbenringen wird im Allgemeinen als eine Verschwendung von einem im Allgemeinen teuren Beschichtungsmaterial angesehen, da die Innenseite eines Kolbenrings nicht belastet wird.

Es sind aus den Dokumenten DE 7608044 U1, JP 2005351460 A, JP 2008057671 A und GB440 bereits verschiedene Kolbenringe bekannt, die Bimetallstrukturen verwenden.

Es sind bereits verschiedene Veröffentlichungen zum Thema Kolbenringe bekannt. Die EP2206937 (A1) beschreibt einen Kolbenring mit integrierter Anpressfeder, die US2010140880 (A1) offenbart einen Kolbenring, dessen Ober- und/oder Unterseite beschichtet ist, die US 2010127462 (A1) betrifft einen Kolbenring mit einer mehrsichtigen Beschichtung der Lauffläche/Außenfläche des Kolbenrings.

Demgegenüber offenbart die DE 102005063123 (B3) einen Kolbenring mit einer mehrfachen Beschichtung der Lauffläche/Außenfläche des Kolbenrings. EP2183404 (A1) zeigt ebenfalls einen an der Außenfläche beschichteten Kolbenring. EP2119807 (A1) betrifft ebenfalls einen Kolbenring, an dessen Außenfläche eine Verschleißschutzschicht angeordnet ist. Die WO2008151619 (A1) offenbart einen Kolbenring, der dazu ausgelegt ist, in der Kolbenringnut zu verkippen.

Bei bekannten außenbeschichteten Kolbenringen kann es durch die Außenbeschichtung zu unerwünschten Bimetalleffekten kommen, bei denen sich eine Außenbeschichtung eines Kolbenrings bei steigenden Temperaturen anders ausdehnt als das Material des Kolbenrings selbst, wodurch die Spannung bzw. die resultierende Radialdruckverteilung des Kolbenrings beeinträchtigt werden kann. Üblicherweise sind diese Effekte vernachlässigbar, da die Beschichtung üblicherweise nur einen vernachlässigbar kleinen Teil der Querschnittsfläche des Kolbenrings bildet, und die Festigkeit der Beschichtung nur wenig über der Festigkeit des Materials des Kolbenrings liegt.

Bei moderneren Verschleißschutzbeschichtungen kann es dazu kommen, dass durch die immer weiter steigende Härte der Verschleißschutzschichten Bimetalleffekte an den Kolbenringen auftreten, was dazu führen kann, dass sich der von dem Kolbenring ausgeübte Radialdruck und die resultierende Radialdruckverteilung des Kolbenrings bei Erwärmung verändern.

Dieser Effekt tritt bei unbeschichteten und vollständig beschichteten Kolbenringen nicht auf.

JP58072769 (A) offenbart einen gattungsgemäßen Kolbenring.

Die Aufgabe der vorliegenden Erfindung besteht darin, einen mit einer Verschleißschutzschicht versehenen Kolbenring mit verbesserter Radialdruckverteilung bereitzustellen.

Herkömmlicherweise würde man davon ausgehen, den Bimetalleffekt zu beseitigen, indem die Beschichtung unterbrochen wird, oder nur Teile der Außenfläche beschichtet werden. Es ist ebenfalls zu erwarten, dass der Fachmann die Form eines Kolbenrings im kalten Zustand so ändert, dass eine durch den Bimetalleffekt zu erwartende Veränderung der Radialdruckverteilung des Kolbenrings bereits in der Auslegung des Kolbenrings berücksichtigt wird. Ein Fachmann würde, zur Vermeidung von Abweichungen in der Radialdruckverteilung des Kolbenrings diesen so formen, dass der Kolbenring bei Betriebstemperatur und mit dem Bimetalleffekt die gewünschte Radialdruckverteilung zeigt.

Der Bimetalleffekt wirkt sich besonders im Bereich des Stoßes aus, was dazu führt, dass die Enden des Kolbenrings am Stoß, d. h. die Stoßenden bei Erwärmung nach außen gedrückt werden. Dieser Effekt ist als "Stoßbeißen" bekannt. Dies führt dazu, dass die Stoßenden viel stärker belastet werden, als der Rest des Kolbenringumfangs. Durch die stärkere Belastung der Stoßenden verscheißen diese viel stärker als der Rest des Kolbenringumfangs. Die Verschleißschutzschicht kann dabei im Bereich des Stoßes abgetragen werden, sodass in diesem Bereich eine "Fressgefahr" d. h. die Gefahr eines Kolben- bzw. "Kolbenringfressers" besteht.

Bisher wurde diesem Effekt dadurch entgegengetreten, indem man bei der Herstellung der Ringe diese so vorgeformt hat, dass sie im Bereich des Stoßes nur einen geringen Druck ausüben. Diese Maßnahme hat sich jedoch nicht als ausreichend erwiesen.

Erfindungsgemäß wird jedoch der Bimetalleffekt dadurch vermieden, dass zwischen einer Verschleißschutzschicht und dem Kolbenring eine Zwischenschicht aufgebracht wird. Die Zwischenschicht weist Abmessung und einen Wärmeausdehnungskoeffizient auf, die so gewählt sind, dass der Bimetalleffekt zwischen einer Verschleißschutzschicht und dem Kolbenring erheblich abgeschwächt bzw aufgehoben wird.

Die Verschleißschutzschicht weist aufgrund ihrer größeren Härte und Widerstandsfähigkeit einen geringeren Wärmeausdehnungskoeffizienten als das Material des Kolbenrings auf. Durch die Verschleißschutzschicht wird bei einer Erwärmung des Kolbenrings dieser durch den Bimetalleffekt nach außen gebogen, was sich besonders im Bereich des Stoßes auswirkt.

Wenn nun eine Zwischenschicht mit einem größeren Wärmeausdehnungskoeffizienten als dem der Verschleißschutzschicht und dem des Kolbenringmaterials dazwischen aufgebracht wird, gleichen sich im Idealfall die beiden Bimetalleffekte gegenseitig aus. Dies ist möglich, da die Dickenabmessung des Kolbenrings weit über denen der beiden anderen Schichten liegt. Dadurch liegen die Verschleißschutzschicht und die Zwischenschicht auf einer Seite der neutralen Faser des beschichteten Kolbenrings.

Aus den insgesamt 6 Parametern, d. h. den drei Wärmeausdehnungskoeffizienten und den drei Dickenabmessungen des Kolbenrings, der Verschleißschutzschicht und der Zwischenschicht lässt sich jeder gewünschte Bimetalleffekt kompensieren bzw. ausgleichen.

Erfindungsgemäß wird dies dadurch erreicht, dass ein Kolbenring (beispielsweise aus Gusseisen oder Stahl) zuerst an der Außenseite mit einer Zwischenschicht beschichtet wird, die einen höheren Wärmeausdehnungskoeffizienten aufweist als das Material des Kolbenrings. In einem zweiten Schritt wird eine Verschleißschutzschicht auf die Außenseite der Zwischenschicht aufgebracht, die einen kleineren Wärmeausdehnungskoeffizienten aufweist, als das Material des Kolbenrings. Dabei kann es vorteilhaft sein, wenn die Dicken der Zwischenschicht und der Verschleißschutzschicht wesentlich kleiner sind als die Gesamtdicke des Kolbenrings.

Die vorliegende Erfindung stellt damit annähernd eine Kombination aus zwei identischen Bimetallkombinationen dar, deren Effekte sich gegenseitig aufheben. Die Erfindung nutzt dabei eine Doppelbeschichtung eines Kolbenrings. Die Effekte zwischen Kolbenring und Verschleißschutzschicht einerseits und die Effekte zwischen Verschleißschutzschicht und Kolbenring sowie zwischen Verschleißschutzschicht und Zwischenschicht andererseits können so gewählt werden, dass der Kolbenring ein gewünschtes Temperaturverhalten zeigt.

Gemäß einem ersten Aspekt der vorliegenden Erfindung wird ein Kolbenring für einen Verbrennungsmotor bereitgestellt. Der Kolbenring umfasst ein Kolbenring-Grundelement, aus einem Material mit einem ersten Wärmeausdehnungskoeffizient. Der Kolbenring umfasst weiter eine Verschleißschutzschicht, die auf einer in Radialrichtung äußeren Fläche des Kolbenrings angeordnet ist. Die Verschleißschutzschicht besteht aus einem Material, das einen zweiten Wärmeausdehnungskoeffizienten aufweist, der kleiner ist als der erste Wärmeausdehnungskoeffizient. Weiterhin umfasst der Kolbenring eine Zwischenschicht, die zwischen dem Kolbenring-Grundelement und der Verschleißschutzschicht angeordnet ist. Die Zwischenschicht besteht aus einem Material, das einen dritten Wärmeausdehnungskoeffizienten aufweist, der größer ist als der erste Wärmeausdehnungskoeffizient und der zweite Wärmeausdehnungskoeffizient.

In einer weiteren Ausführungsform ist die Dicke der Verschleißschutzschicht kleiner ist als eine Dicke der Zwischenschicht, und die Summe der Dicken der Verschleißschutzschicht und der Zwischenschicht ist kleiner als 20% der Dicke des Kolbenring-Grundelements in Radialrichtung. Damit ist sichergestellt, das beide Schichten auf einer Seite der neutralen Faser des Kolbenrings liegen, und sich die Effekte so einander entgegengesetzt wirken können.

Damit bildet der Kolbenring eine Überlagerung von zwei, eigentlich drei Bimetallen. Das erste Bimetall wird zwischen der Verschleißschutzschicht und dem Kolbenring-Grundkörper gebildet, wie es aus dem Stand der Technik bekannt ist. Das zweite Bimetall wird zwischen der Zwischenschicht und dem Kolbenring-Grundkörper gebildet und soll dazu dienen, den Bimetalleffekt zwischen Verschleißschutzschicht und Grundkörper entgegenzuwirken. Das dritte Bimetall wird zwischen Verschleißschutzschicht und Zwischenschicht gebildet. Das dritte Bimetall sollte an sich den stärksten Effekt zeigen, da es aus zwei Metallen mit stark unterschiedlichen Wärmeausdehnungskoeffizienten gebildet wird. Das dritte Bimetall kann jedoch fast vernachlässigt werden, da die Kräfte die von den zwei Beschichtungen erzeugt werden können, aufgrund der geringen Schichtdicken der Verschleißschutzschicht und der Zwischenschicht im Vergleich zu der Abmessung des Kolbenrings.

Vorzugsweise ist die Zwischenschicht etwa 1,5 bis 15 mal so dick, vorzugsweise 3 bis 8 mal und weiter Bevorzugt 6 bis 8 mal so dick wie Verschleißschutzschicht. Die unterschiedlichen Diecken dienen dazu, die unterschiedlichen Festigkeiten der jeweiligen Materialien auszugleichen.

In einer Ausführungsform ist die Zwischenschicht in Umfangsrichtung mit einer Dickenvariation versehen, um entlang des Umfangs einen unterschiedlich starken Bimetalleffekt zu erzielen und damit die Radialdruckverteilung bei der Betriebstemperatur zu verbessern. Eine Dickenvariation der Zwischenschicht sollte sich aufgrund der relativ geringen Festigkeit (die mit dem großen Wärmeausdehnungskoeffizienten zusammenhängt) leichter bearbeiten lassen, als das Material des Kolbenring-Grundkörpers als auch das Material der Verschleißschutzschicht. Damit kann schon bei der Herstellung entweder beim Auftragen der Zwischenschicht oder nach dem Auftrag der Zwischenschicht diese bearbeitet werden, um in Umfangsrichtung eine Dickenvariation zu zeigen. Vorzugsweise wird die Zwischenschicht im Bereich der Stoßfuge dicker ausgeführt, und dort stärker dem Bimetalleffekt zwischen Kolbenring und Verschleißschutzschicht entgegenzuwirken.

In einer Ausfühnmgsform ist das Kolbenring-Grundelement in Umfangsrichtung mit einer Dickenvariation versehen, um entlang des Umfangs einen unterschiedlich starken Bimetalleffekt zu erzielen und dadurch die Radialdruckverteilung zu verbessern. Die Ausführungsform kann insbesondere dazu dienen, in Kombination mit einer dickeren Zwischenschicht einerseits den Bimetalleffekt zwischen der Zwischenschicht und dem Kolbenringgrundelement zu verstärken, und andererseits den Kolbenring im Bereich des Stoßes elastischer zu machen. Durch eine Geringere Dicke des Kolbenrings in Radialrichtung wir der Kolbenring biegsamer und der Bimetalleffekt verstärkt sich.

In einer weiteren Ausfühnmgsform ist der Kolbenring und/oder das Kolbenring-Grundelement unrund geformt. Die Unrundform betrifft dabei einen kalten, nicht eingebauten Zustand. Die Unrundform dient dazu, damit der Bimetalleffekt bei Betriebstemperatur zusammen mit der Zylinderinnenwand auf den Kolbenring ausüben diesen in eine runde Form mit günstiger Radialdruckverteilung bringen.

Vorzugsweise ist das Kolbenring-Grundelement aus einem Gusseisen- oder Stahlwerkstoff hergestellt. Gusseisen- oder Stahlwerkstoffe sind momentan die meistverwendeten und günstigsten Werkstoffe für Kolbenringe.

Weiter bevorzugt ist der Kolbenring mit einer Verschleißschutzschicht versehen, die durch ein PVD-Verfahren aufgebracht wurde.

Weiter wird in einer beispielhaften Ausführungsform die Zwischenschicht aus Kupfer oder einem Kupferwerkstoff hergestellt. Kupfer ist durch seine Materialeigenschaften wie dem Schmelzpunkt von ca 1000°C ausreichend warmfest. Kupfer weist eine Bruchdehnung von 40 % auf, was ebenfalls in einem günstigen Bereich liegt, um eine Rissbildung zwischen der Zwischenschicht und der Verschleißschutzschicht bzw. dem Kolbenring-Grundelement zu vermeiden.

In einer Ausführungsform ist die Verschleißschutzschicht in Axialrichtung des Kolbenrings nur auf einem Teil der Außenfläche des Kolbenring-Grundelements bzw. der Zwischenschicht aufgebracht. Weiter ist vorgesehen, ebenfalls nur einen Teil der Außenflache des Kolbenrings mit einer Zwischenschicht zu versehen, bzw. diese nach dem Auftrag teilweise zu entfernen. Damit lässt sich die vorliegende Erfindung ebenfalls besonders im Bereich von Ölabstreifringen einsetzen.

In einer weiteren Ausführungsform beträgt der erste Wärmeausdehnungskoeffizient zwischen 8 bis 12*10⁻⁶/K, der zweite Wärmeausdehnungskoeffizient zwischen 2 bis 5*10⁻⁶/K und der dritte Wärmeausdehnungskoeffizient zwischen 16 bis 90*10⁻⁶/K. In diesen Bereichen werden vorteilhafte Effekte erwartet, die die bisherigen Probleme mit Kolbenringbeschichtungen vermeiden.

Vorzugsweise ist außen auf dem Kolbenring weiter eine Einlaufschicht auf der Verschleißschutzschicht angeordnet. Eine derartige Schicht kann den Einlaufprozess des Motors insgesamt positiv beeinflussen.

In den Figuren wird die Erfindung anhand von beispielhaften Ausführungsformen erläutert.
Figur 1 stellt einen herkömmlichen Kolbenring in einer Aufsicht dar.
Figur 2 zeigt einen herkömmlichen Kolbenring mit einer Verschleißschutzschicht in einer Aufsicht.
Figur 3 zeigt einen erfindungsgemäßen Kolbenring, der nur mit einer Zwischenschicht versehen ist, in einer Aufsicht.
Figur 4 stellt einen erfindungsgemäßen Kolbenring mit einer Verschleißschutzbeschichtung sowie mit einer Zwischenschicht in einer Aufsicht dar.
Figur 5 stellt einen herkömmlichen Kolbenring in einer Schnittansicht dar.
Figur 6 zeigt einen herkömmlichen Kolbenring mit einer Verschleißschutzschicht in einer Schnittansicht.
Figur 7 ist eine Schnittansicht durch einen erfindungsgemäßen Kolbenring, der mit einer Verschleißschutzschicht und mit einer Zwischenschicht versehen ist.
Figur 8 stellt den Kolbenring von Figur 7 mit einer zusätzlichen Einlaufbeschichtung in einer Schnittansicht dar.
Figur 9 stellt den Kolbenring von Figur 7 mit einer zusätzlichen Ausführung dar, bei der die Verschleißschutzschicht nur auf einem Teil der Außenfläche des Kolbenrings aufgebracht ist.

In der folgenden detaillierten Beschreibung der Figuren werden sowohl in der Beschreibung als auch in der Zeichnung gleiche Bezugszeichen für gleiche oder ähnliche Elemente oder Komponenten verwendet. Die Figuren dienen nur der Veranschaulichung und sind nicht maßstabgerecht, sondern stellen lediglich schematische Darstellungen dar.

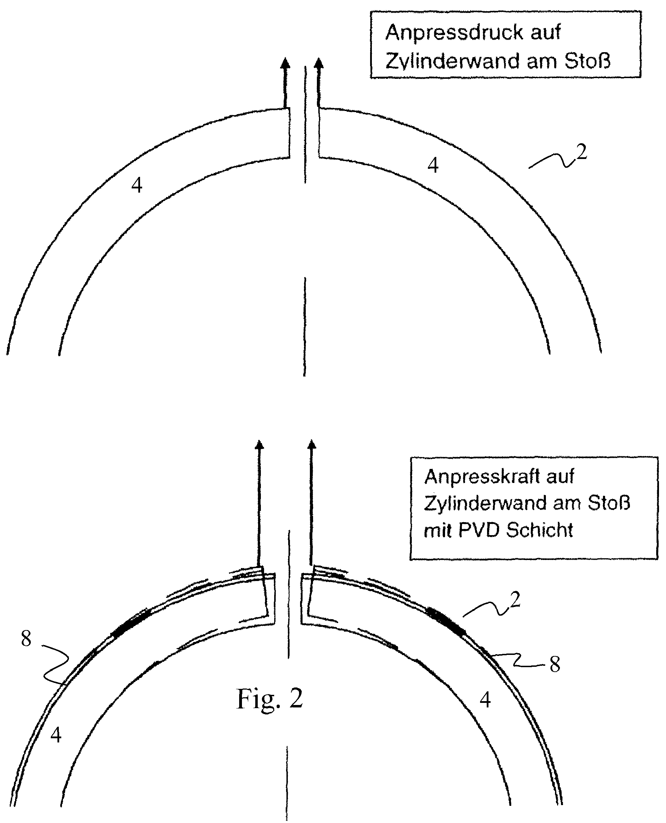

Figur 1 stellt einen herkömmlichen Kolbenring 2 aus einem Material ohne jede Beschichtung in einer Aufsicht dar. Das Kolbenring-Grundelement 4 ist ein fast geschlossener Kreisbogen. Die Stoßenden des Kolbenrings 2 üben eine geringe Kraft auf die Zylinderinnenwand aus, die durch die kurzen Pfeile angedeutet wird. Diese Kraft ändert sich bei Erwärmung bzw. bei erreichen der Betriebstemperatur nicht wesentlich, da der Kolbenring aus einem einzelnen Material keinen Bimetalleffekt zeigt.

Figur 2 stellt einen herkömmlichen Kolbenring 2 aus einem Material mit einer Verschleißschutzschicht 8 in einer Aufsicht dar. Bei diesem Kolbenring 2 ist auf dem Kolbenring-Grundelement 4 eine PVD-Verschleißschutzschicht 8 aufgebracht. Die Verschleißschutzschicht 8 ist stabiler und fester, als das Material des Kolbenring-Grundelements 4. Daher weist sie auch einen geringeren Wärmeausdehnungskoeffizienten auf als das Material des Kolbenring-Grundelements 4. Bei Erwärmung tritt ein Bimetalleffekt insbesondere an den Stoßenden auf, der diese nach außen drückt, was zu einem verstärkten Verschleiß der Stoßenden führt. Durch diesen verstärkten Verschleiß besteht die Gefahr eines Kolbenringfressers, mit einer anschließenden Zerstörung des Motors, da die erhöhte Anpresskraft der Stoßenden, nicht mehr durch den Schmierfilm der Zylinderinnenwand aufgenommen werden kann. Die Stoßenden des Kolbenrings 2 üben eine starke Kraft auf die Zylinderinnenwand aus, die durch die langen Pfeile angedeutet wird. Diese Kraft ist im Vergleich zum kalten Kolbenring wesentlich erhöht.

Dieser Effekt ist in der Figur 2 durch die gestrichelte Darstellung des Kolbenrings bei Betriebstemperatur dargestellt. Die längeren Pfeile an den Stoßenden verdeutlichen die höhere Anpresskraft der Stoßenden an die Zylinderinnenwand.

Dieser Effekt kann durch eine Unrundformung des Kolbenrings entgegengewirkt werden, was jedoch in vielen Fällen nicht ausreicht. Dabei wird der Kolbenring so vorgeformt, dass die Verformung durch den Bimetalleffekt bei Erwärmung auf Betriebstemperatur ausgeglichen wird.

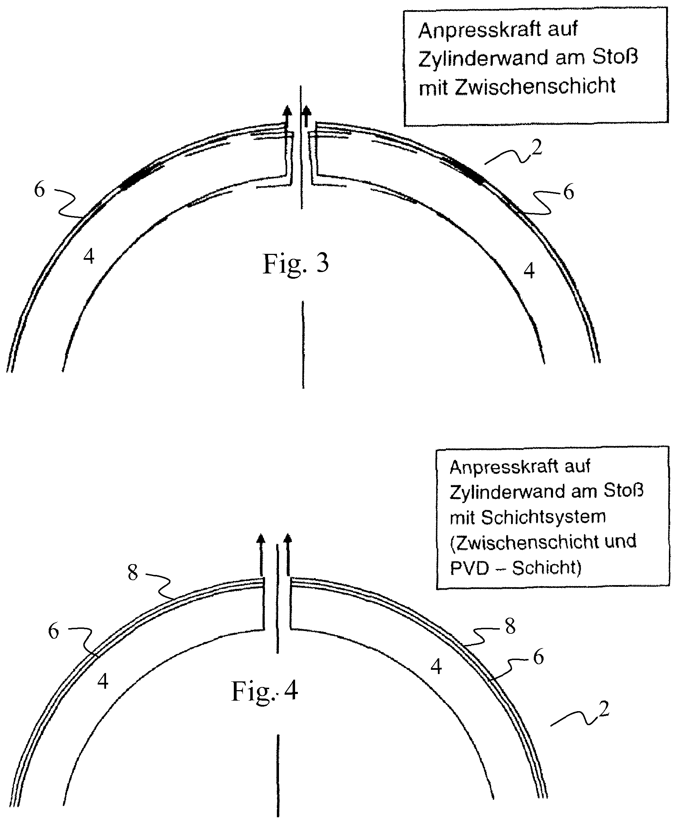

Figur 3 stellt einen herkömmlichen Kolbenring 2 aus einem Material mit nur einer Zwischenschicht 6 in einer Aufsicht dar. Bei diesem Kolbenring ist auf dem Kolbenring-Grundelement 4 eine Kupfer-Schicht 8 aufgebracht. Die Zwischenschicht 6 hat eine geringere Festigkeit, als das Material des Kolbenring-Grundelements 4. Daher weist sie auch einen höheren Wärmeausdehnungskoeffizienten auf als das Material des Kolbenring-Grundelements 4. Bei Erwärmung tritt ein Bimetalleffekt insbesondere an den Stoßenden auf, der diese nach innen drückt, was zu einem verminderten Verschleiß der Stoßenden führt. Durch die Zwischenschicht kann dem verstärkten Verschleiß begegnet werden. Da die Zwischenschicht jedoch aus einem weicheren bzw. weniger festen Material besteht, als dem des Kolbenrings, wird sie auf dem gesamten Umfang schnell abgetragen, was in der Folge wiederum zu einem erhöhten Verschleiß führt.

Die Stoßenden des Kolbenrings 4, der lediglich mit der Zwischenschicht 6 versehen ist, üben eine geringe Kraft auf die Zylinderinnenwand aus, wie durch die kurzen Pfeile angedeutet wird. Diese Kraft verringert sich bei Erwärmung bzw. bei erreichen der Betriebstemperatur. Dieser Effekt ist in der Figur 3 durch die gestrichelte Darstellung des Kolbenrings bei Betriebstemperatur dargestellt. Die kürzeren Pfeile an den Stoßenden verdeutlichen die verringerte Anpresskraft der Stoßenden an die Zylinderinnenwand. Die gestrichelten Linien zeigen die Verformung des Kolbenrings bei Erwärmung.

Figur 4 stellt einen erfindungsgemäßen Kolbenring 2 aus einem Material mit einer Verschleißschutzschicht und einer Zwischenschicht dar. In dieser Ausfuhrungsform ist auf dem Kolbenring-Grundelement 4 eine Zwischenschicht 6 und eine PVD-Verschleißschutzschicht 8 aufgebracht. Die vorstehend beschriebenen Bimetalleffekte können sich bei geeignet gewählten Materialkonstanten und geeigneten Schichtdicken gerade gegeneinander Aufheben. Damit kann der Anpressdruck der Stoßenden bei allen Temperaturbereichen auf einem gewünschten Niveau gehalten werden. Gleichzeitig kann durch die Verschleißschutzschicht 8 die Einsatzdauer des Kolbenrings und damit die des Motors erhöht werden. Es ist mit der vorliegenden Erfindung möglich, die Vorteile eines mit einer Verschleißschutzschicht versehenen Kolbenrings zu erreichen ohne die üblichen Nachteile wie erhöhte Anpresskräfte an den Stoßenden in Kauf nehmen zu müssen. Ein weiterer Vorteil der vorliegenden Erfindung besteht darin, dass nur die Außenflächen des Kolbenrings beschichtet werden müssen, was je nach Herstellungsverfahren eine bedeutende Vereinfachung des Herstellungsprozesses darstellt.

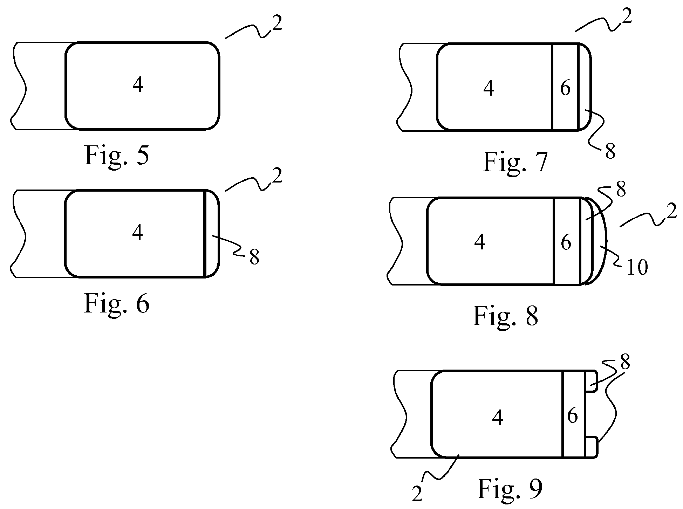

Figur 5 stellt einen herkömmlichen Kolbenring bzw. ein Kolbenring-Grundelement 2, d. h. den Kolbenring von Figur 1, in einer Schnittansicht dar.

Figur 6 zeigt einen herkömmlichen Kolbenring mit einem Kolbenring-Grundelement 2 und einer Verschleißschutzschicht 8, d. h. den Kolbenring von Figur 2 in einer Schnittansicht.

Figur 7 ist eine Schnittansicht durch einen erfindungsgemäßen Kolbenring 2, bei dem auf dem Kolbenring-Grundelement 4 eine Verschleißschutzschicht 8 und eine Zwischenschicht 6 aufgebracht sind.

Figur 8 stellt den Kolbenring von Figur 7 mit einer zusätzlichen Einlaufbeschichtung 10 in einer Schnittansicht dar.

Figur 9 stellt den Kolbenring von Figur 7 mit einer zusätzlichen Ausführung dar, bei der die Verschleißschutzschicht 8 nur auf einem Teil der Außenfläche des Kolbenrings 2 aufgebracht ist. Diese Ausführungsform eignet sich besonders für Öl-Abstreifringe, die nur mit 2 oder 3 Leisten auf der Zylinderinnenwand aufliegen, um einen definierten Ölfilm auf der Zylinderinnenwand zu erzeugen.

Die Darstellung in den Figuren ist lediglich schematisch und gibt nicht die tatsächlichen Größenverhältnisse wieder. Weitere Kombinationen der beschriebenen Ausführungsformen sollen ebenfalls als offenbart erachtet werden.

## Patentansprüche

1. Kolbenring (2) für einen Verbrennungsmotor, umfassend
ein Kolbenring-Grundelement (4), das aus einem Material mit einem ersten Wärmeausdehnungskoeffizient gemacht ist,
eine Verschleißschutzschicht (8), die an einer in Radialrichtung äußeren Fläche des Kolbenrings (2) angeordnet ist, und die aus einem Material gemacht ist, das einen zweiten Wärmeausdehnungskoeffizienten aufweist, der kleiner ist als der erste Wärmeausdehnungskoeffizient,
**gekennzeichnet durch**
eine Zwischenschicht (6), die zwischen dem Kolbenring-Grundelement (4) und der Verschleißschutzschicht (8) angeordnet ist, wobei die Zwischenschicht aus einem Material gemacht ist, das einen dritten Wärmeausdehnungskoeffizienten aufweist, der größer ist als der erste Wärmeausdehnungskoeffizient.

2. Kolbenring (2) nach Anspruch 1, **dadurch gekennzeichnet, dass** eine Dicke der Verschleißschutzschicht (8) kleiner ist als eine Dicke der Zwischenschicht (6), und die Dicken der Verschleißschutzschicht (8) und Dicke der Zwischenschicht (6) kleiner sind als 20% der Dicke des Kolbenring-Grundelements (4) in Radialrichtung.

3. Kolbenring (2) nach Anspruch 1 oder 2, **gekennzeichnet, durch** eine Dickenvariation der Zwischenschicht (6) in Umfangsrichtung.

4. Kolbenring (2) gemäß einem der vorstehenden Ansprüche, **gekennzeichnet durch** eine Dickenvariation des Kolbenring-Grundelements (4) in Umfangsrichtung.

5. Kolbenring (2) gemäß einem der vorstehenden Ansprüche, **dadurch gekennzeichnet, dass** der Kolbenring (2) oder das Kolbenring-Grundelement (4) oder beide unrund geformt sind.

6. Kolbenring (2) gemäß einem der vorstehenden Ansprüche, **dadurch gekennzeichnet, dass** das Kolbenring-Grundelement (4) aus einem Gusseisen- oder Stahlwerkstoff besteht.

7. Kolbenring (2) gemäß einem der vorstehenden Ansprüche, **dadurch gekennzeichnet, dass** die Verschleißschutzschicht (8) durch ein PVD-Verfahren aufgebracht ist.

8. Kolbenring (2) gemäß einem der vorstehenden Ansprüche, **dadurch gekennzeichnet, dass** die Zwischenschicht (6) aus Kupfer oder einem Kupferwerkstoff besteht.

9. Kolbenring (2) gemäß einem der vorstehenden Ansprüche, **dadurch gekennzeichnet, dass** die Verschleißschutzschicht (8) in Axialrichtung nur auf einem Teil der Außenfläche des Kolbenring-Grundelements (4) bzw. der Zwischenschicht (6) aufgebracht ist.

10. Kolbenring (2) gemäß einem der vorstehenden Ansprüche, **dadurch gekennzeichnet, dass** der erste Wärmeausdehnungskoeffizient zwischen 8 bis 12*10⁻⁶/K beträgt, der zweite Wärmeausdehnungskoeffizient zwischen 2 bis 5*10⁻⁶/K beträgt und der dritte Wärmeausdehnungskoeffizient zwischen 16 bis 90*10⁻⁶/K beträgt.

11. Kolbenring (2) gemäß einem der vorstehenden Ansprüche, weiter umfassend eine Einlaufschicht (10), die außen auf der Verschleißschutzschicht (8) angeordnet ist.

## Claims

1. Piston ring (2) for an internal combustion engine, comprising:
a piston ring basis element (4) made of a material having a first thermal expansion coefficient,
a wear protection layer (8), arranged on a radially outer face of the piston ring (2) and being made of a material having a second thermal expansion coefficient that is smaller than the first thermal expansion coefficient,
**characterized by**
an intermediate layer (6), arranged between the piston ring basis element (4) and the wear protection layer (8), wherein the intermediate layer is made of a material having a third thermal expansion coefficient, that is bigger than the first thermal expansion coefficient.

2. Piston ring (2) according to claim 1, **characterized in that** a thickness of the wear protection layer (8) is smaller than a thickness of the intermediate layer (6), and the thickness of the wear protection layer (8) and the thickness of the intermediate layer (6) are smaller than 20% of the thickness of the piston ring basis element (4) in radial direction.

3. Piston ring (2) according to claim 1 or 2, **characterized by** a variation of the thickness of the intermediate layer (6) in circumferential direction.

4. Piston ring (2) according to one of the preceding claims, **characterized by** a variation of the thickness of the piston ring basis element (4) in circumferential direction.

5. Piston ring (2) according to one of the preceding claims, **characterized in that** the piston ring (2) or the piston ring basis element (4) or both are formed non-circular.

6. Piston ring (2) according to one of the preceding claims, **characterized in that** the piston ring basis element (4) consists of a cast iron or steel material.

7. Piston ring (2) according to one of the preceding claims, **characterized in that** the wear protection layer (8) is applied by a PVD-method.

8. Piston ring (2) according to one of the preceding claims, **characterized in that** the intermediate layer (6) consists of copper or of a copper containing material.

9. Piston ring (2) according to one of the preceding claims, **characterized in that** the wear protection layer (8) is applied in axial direction only to a part of the outer surface of the piston ring basis element (4) and the intermediate layer (6), respectively.

10. Piston ring (2) according to one of the preceding claims, **characterized in that** the first thermal expansion coefficient is between 8 to 12*10⁻⁶/K, the second thermal expansion coefficient is between 2 to 5* 10⁻⁶/K, and the third thermal expansion coefficient is 16 to 90*10⁻⁶/K.

11. Piston ring (2) according to one of the preceding claims, further comprising a run-in layer (10), arranged on the outer side of the wear protection layer (8).

## Revendications

1. Segment de piston (2) pour un moteur à combustion interne, comprenant
un élément de base de segment de piston (4), qui est fabriqué dans un matériau avec un premier coefficient de dilatation thermique,
une couche de protection contre l'usure (8), qui est disposée sur une surface extérieure du segment de piston (2) dans la direction radiale, et qui est fabriqué dans un matériau qui présente un deuxième coefficient de dilatation thermique, qui est plus petit que le premier coefficient de dilatation thermique,
**caractérisé par**
une couche intermédiaire (6) qui est disposée entre l'élément de base de segment de piston (4) et la couche de protection contre l'usure (8), dans lequel la couche intermédiaire est fabriquée dans un matériau qui présente un troisième coefficient de dilatation thermique, qui est plus grand que le premier coefficient de dilatation thermique.

2. Segment de piston (2) selon la revendication 1, **caractérisé en ce que** une épaisseur de la couche de protection contre l'usure (8) est plus petite qu'une épaisseur de la couche intermédiaire (6) et les épaisseurs de la couche de protection contre l'usure (8) et la couche intermédiaire (6) sont plus petites que 20 % de l'épaisseur de l'élément de base de segment de piston (4)dans la direction radiale.

3. Segment de piston (2) selon la revendication 1 ou 2, **caractérisé par** une variation d'épaisseur de la couche intermédiaire (6) dans la direction circonférentielle.

4. Segment de piston (2) selon une des revendications précédentes, **caractérisé par** une variation d'épaisseur de l'élément de base de segment de piston (4) dans la direction circonférentielle.

5. Segment de piston (2) selon une des revendications précédentes, **caractérisée en ce que** le segment de piston (2) ou l'élément de base de segment de piston (4) sont tous deux façonnés de manière non circulaire.

6. Segment de piston (2) selon une des revendications précédentes, **caractérisé en ce que** l'élément de base de segment de piston (4) est constitué de fonte ou d'acier.

7. Segment de piston (2) selon une des revendications précédentes, **caractérisé en ce que** la couche de protection contre l'usure (8) est appliquée selon un procédé PVD.

8. Segment de piston (2) selon une des revendications précédentes, **caractérisé en ce que** la couche intermédiaire (6) est constituée de cuivre ou d'un matériau cuivré.

9. Segment de piston (2) selon une des revendications précédentes, **caractérisé en ce que** la couche de protection contre l'usure (8) est appliquée dans la direction axiale seulement sur une partie de la surface extérieure de l'élément de base de segment de piston (4), respectivement de la couche intermédiaire (6).

10. Segment de piston (2) selon une des revendications précédentes, **caractérisé en ce que** le premier coefficient de dilatation thermique est compris entre 8 et 12*10⁻⁶K, le deuxième coefficient de dilatation thermique est compris entre 2 et 5*10⁻⁶K, et le troisième coefficient de dilatation thermique est compris entre 16 et 90*10⁻⁶K.

11. Segment de piston (2) selon une des revendications précédentes, comprenant en outre une couche de rodage (10), qui est disposée à l'extérieur sur la couche de protection contre l'usure (8).
